# EUROPÄISCHE PATENTANMELDUNG

(11) **EP 0 865 103 A2**
(43) Veröffentlichungstag der Anmeldung: **16.09.1998**
(21) Anmeldenummer: 98103424.2
(22) Anmeldetag: 27.02.1998
(51) Int. Cl.: H01R 4/24, H01R 23/68

(54) **Moduläre Verteilerleiste für die Telekommunikations- und Datentechnik**

(30) Priorität: 10.03.1997 DE 19711128
(71) Anmelder: KRONE Aktiengesellschaft, 14167 Berlin (DE)
(72) Erfinder: Dohnke, Ingo, Dipl.-Ing., 14513 Teltow (DE)

(57) **Zusammenfassung**

Die Erfindung bezieht sich auf eine Verteilerleiste für die Telekommunikations- und Datentechnik, insbesondere für den Hauptverteiler von Fernsprech- und Datenleitungen, mit im Inneren der modular aufgebauten Verteilerleiste angeordneten Kontaktfedern 1, welche aus Anschlußkontakten 7,8 in Schneid-Klemm-Technik auf der Vorder- und Rückseite der Leiste, aus einem Fernmeldekontakt 22 im mittleren Bereich gebildet sind, und bei denen ein Abgreifkontakt 19 im vorderen Bereich der Kontaktfeder 1 ausgebildet ist.

Die Aufgabe der Erfindung, eine gattungsgemäße Verteilerleiste zu entwickeln, die ein unkompliziert aufgebautes Kontaktelement enthält und an der die Drahtführung verbessert und bei der ein sicheres Anlegen der Kabeladern gewährleistet sind, wird dadurch gelöst, daß die Kontaktfeder 1 aus einem Basisteil 3 und einem darauf angebrachten Kontaktfederteil 2 gebildet ist, wobei im mittleren Bereich des Basisteils 3 Fixierpunkte 4 für die Längsrichtung und eine Öffnung 6 zum Durchtauchen des aufgebrachten Kontaktfederteils 2 vorgesehen sind und im vorderen Bereich des Basisteils 3 eine Bohrung 5 zur Lagefixierung des aufzubringenden Kontaktfederteils 2 angeordnet ist.

## Beschreibung

Die Erfindung bezieht sich auf eine Verteilerleiste für die Telekommunikations- und Datentechnik, insbes. für den Hauptverteiler von Fernsprech- und Datenleitungen gemäß dem Oberbegriff des Anspruches 1.

Derartige Verteilereinrichtungen, insbesondere für den Hauptverteiler von Fernsprechanlagen, dienen als Schnittstelle für die Teilnehmer- und Vermittlungsstellen von Fernsprechanlagen.

Aus der DE 195 37 529.7 ist eine Verteilerleiste für die Telekommunikations- und Datentechnik, insbesondere für den Hauptverteiler von Fernsprech- und Datenleitungen, bekannt, die Schneid-Klemm-Kontaktelemente zum Anschluß sowohl der Teilnehmer- als auch der Vermittlungskabel aufweist, und die modular aufgebaut ist und im Inneren einstückig ausgebildete Kontaktfedern enthält. Die im Inneren der Verteilerleiste angeordneten einstückigen Kontaktfedern sind aus Anschlußkontakten in Schneid-Klemm-Technik auf der Vorder- und Rückseite der Leiste und aus einem Fernmeldekontakt im mittleren Bereich gebildet. Der Fernmeldekontakt besteht aus zwei Kontaktflächen, die als Doppelkontakte ausgebildet sein können. Ein Abgreifkontakt ist im vorderen Bereich der Kontaktfeder ausgebildet. Die Herstellung dieser einstückigen Kontaktfedern ist kompliziert.

Der Erfindung liegt die Aufgabe zugrunde, eine Verteilerleiste zu entwickeln, die ein unkompliziert aufgebautes Kontaktelement enthält und an der die Drahtführung verbessert und bei der ein sicheres Anlegen der Kabeladern gewährleistet sind.

Die Lösung dieser Aufgabe ergibt sich aus den Merkmalen des Anspruches 1. Die erfindungsgemäß aus einem Basisteil und einem Kontaktfederteil ausgeführte zweiteilige Kontaktfeder gewährleistet eine unkomplizierte, raumsparende und automatisierbare Herstellung der Kontaktelemente der Verteilerleiste. Durch die zweiteilige Ausführung der Kontaktfeder können unterschiedliche Materialien zusammengebracht werden, die eine Optimierung der Eigenschaften der Kontakte hinsichtlich der Federwege, Kontaktkräfte und zu erfüllende Schutzfunktionen gewährleisten. Die im Bereich der Schneid-Klemm-Kontakte einseitig an den Gehäuseteilen angeformten Formkörper gewährleisten, daß das Anlegewerkzeug nur in einer Richtung auf die Schneid-Klemm-Kontakte aufgesetzt werden kann. Damit wird sichergestellt, daß der anzuschaltende Draht immer auf der richtigen Seite abgeschnitten wird.

Die auf der einen Oberfläche der Module vorgesehenen Drahtführungskanäle erleichtern die Zuordnung und Führung von Rangierdrähten zu den Kontakten.

Weitere vorteilhafte Ausgestaltungen der Erfindung ergeben sich aus den Unteransprüchen.

Die Erfindung ist nachfolgend anhand eines in den Zeichnungen dargestellten Ausführungsbeispieles einer Verteilerleiste näher erläutert. Es zeigen:
- Fig. 1: die Seitenansicht einer Kontaktfeder,
- Fig. 2: die Draufsicht auf die Kontaktfeder nach Fig. 1,
- Fig. 3: die Seitenansicht des Basisteils der Kontaktfeder nach den Fig. 1,2,
- Fig. 4: die Draufsicht auf das Basisteil der Kontaktfeder nach Fig. 3,
- Fig. 5: die Seitenansicht auf das Kontaktfederteil der Kontaktfeder nach den Fig. 1,2,
- Fig. 6: die Draufsicht auf das Kontaktfederteil nach Fig. 5,
- Fig. 7: die perspektivische Draufsicht auf ein komplett montiertes Modul einer Verteilerleiste,
- Fig. 8: die perspektivische Draufsicht auf das offene Modul nach Fig. 7 einer Verteilerleiste,
- Fig. 9: die perspektivische Draufsicht auf die Unterseite des Moduls nach Fig. 7 und
- Fig. 10: eine vergrößerte Darstellung eines Teilbereiches der Schlitze für die Schneid-Klemm-Anschlußkontakte.

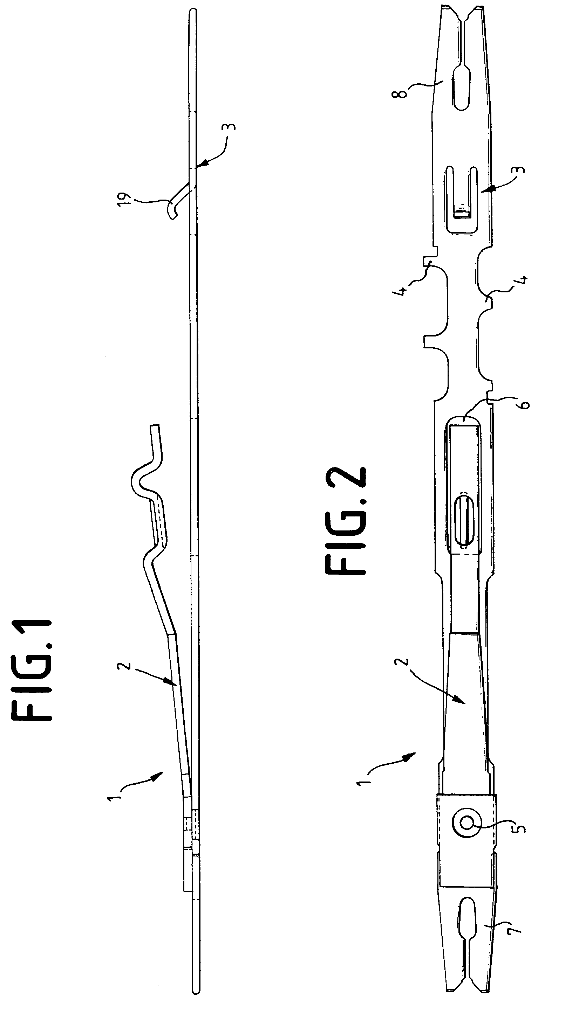

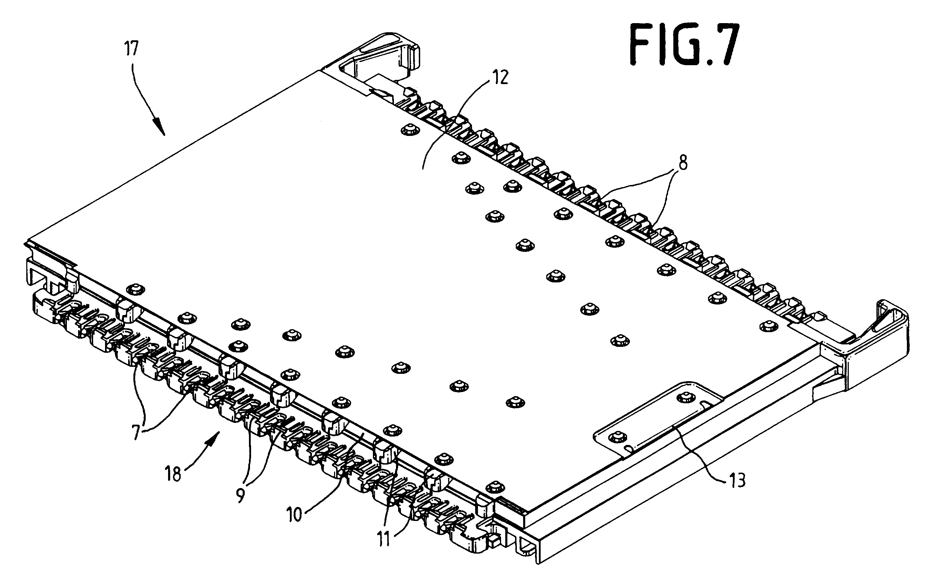

Zum Aufbau eines Hauptverteilers in Telekommunikations- und Datennetzen werden Verteilerleisten aus Modulen 17 gemäß den Fig. 7 bis 10 in senkrechten Blöcken in nicht dargestellten Montagebügeln übereinander angeordnet. Jede Verteilerleiste bildet ein Funktionsmodul, z.B. in Schaltkontaktstellung oder in Trennkontaktstellung. Die Verteilerleisten bestehen aus gleichen Modulen 17 und unterscheiden sich nur in der Stellung zueinander bzw. in der Anordnung von Kontaktfedern 1 nach den Fig. 1 bis 6 sowie in der Beschaltung mit einem oder ohne einen Überspannungsschutz-Stecker oder dgl..

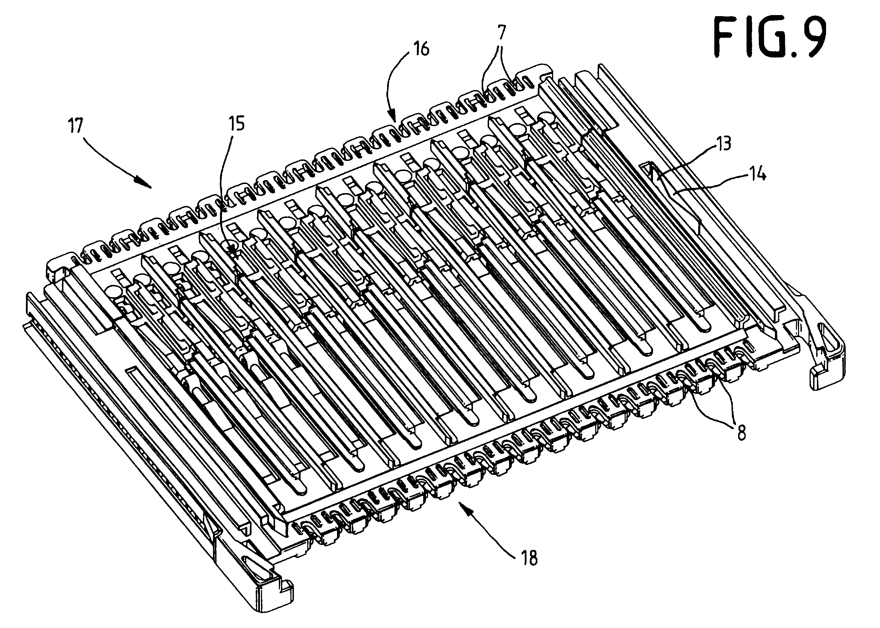

Jede Verteilerleiste besteht aus zwei baugleichen Modulen 17 mit Kammern 15 und Schlitzen 16, die übereinandergeschoben die Verteilerleiste bilden, wobei in den Kammern 15 jeweils eine Kontaktfeder 1 eingebracht ist (Fig. 9).

In den Schlitzen 16 sind die vorderen und hinteren Schneid-Klemm-Kontakte 7,8 der Kontaktfedern 1 (Fig. 1 bis 6) zugänglich.

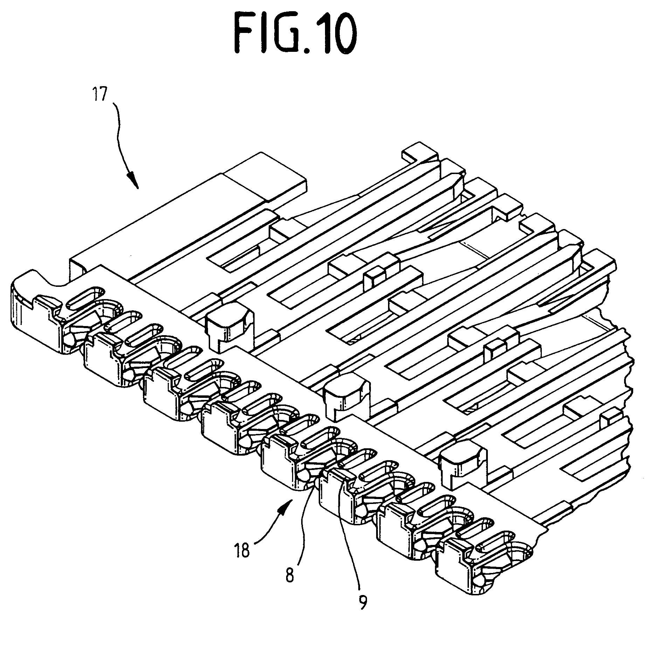

Im Kontaktbereich 18 der Schneid-Klemm-Kontakte 7,8 ist an den Gehäuseteilen der Module 17 einseitig ein Formkörper 9 angeformt, der sicherstellt, daß ein Anlegewerkzeug nur in einer Richtung auf das Schneid-Klemm-Kontaktelement 7,8 aufgesetzt werden kann (Fig. 10). Somit ist gewährleistet, daß der anzuschaltende Draht immer auf der richtigen Seite abgeschnitten wird.

Die Kontaktfeder 1 ist entsprechend der Darstellung in den Fig. 1 bis 6 zweistückig ausgeführt und wird aus einem Basisteil 3 und aus einem Kontaktfederteil 2 gebildet. Die Teile 2, 3 können aus unterschiedlichen Materialien gefertigt werden, um optimale Werte für die Federwege und Kontaktkräfte zu erreichen.

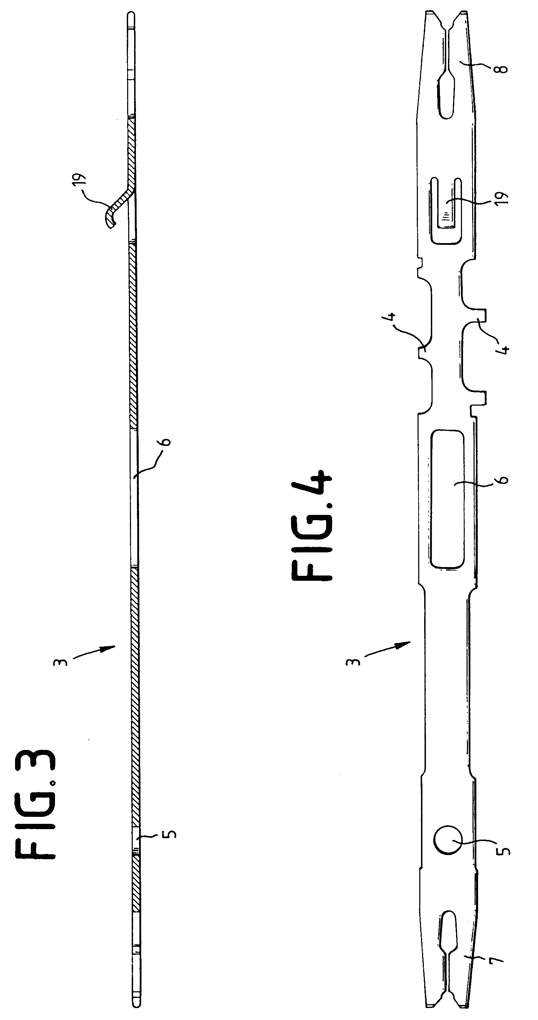

Das Basisteil 3 nach den Fig. 3, 4 bildet die Grundlage für die Kontaktfeder 1. Das Basisteil 3 besteht an jedem Ende aus einem Schneid-Klemm-Kontakt 7,8. Im mittleren Bereich sind Fixierpunkte 4 für die Längsrichtung vorgesehen. Eine Bohrung 5 dient der Lagefixierung des aufzubringenden Kontaktfederteils 2 und eine Öffnung 6 zum Durchtauchen des aufgebrachten Kontaktfederteils 2.

Ein Abgreifkontakt 19 dient zum Kontaktieren von Prüfsteckern.

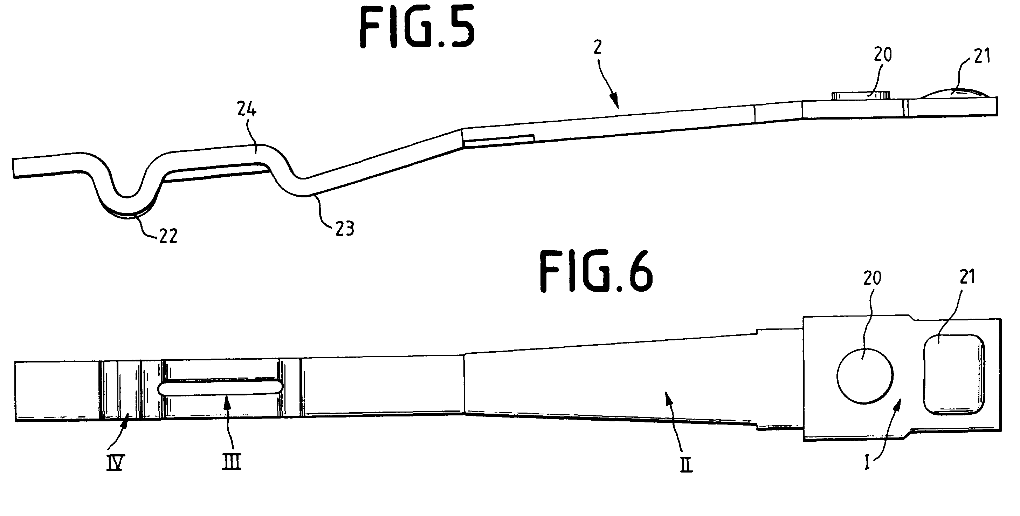

Das Kontaktfederteil 2 nach den Fig. 5, 6 besteht aus vier Bereichen. Der erste Bereich I mit einem Führungsbutzen 20 und einer Schweißwarze 21 dient zur Befestigung des Kontaktfederteils 2 auf dem Basisteil 1, zum Beispiel durch Verschweißen.

Der zweite Bereich II ist die Zone der Durchbiegung, um den Federweg im Bereich III sicherzustellen.

Der Bereich III mit den beiden Kontaktflächen 23, 22 für den Überspannungsschutz und den Fernmeldekontakt wird durch eine Sicke 24 verstärkt, um annähernd den gleichen Federweg an beiden Kontaktstellen 22,23 zu erhalten.

Der Bereich IV dient zur Abstützung des vorgespannten Federteils 2. Die Kontaktflächen 22 der Kontaktfedern 1 der als Ober- und als Unterteil zusammengefügten Module 17 stoßen in der montierten Verteilerleiste zusammen und bilden zusammen den eigentlichen Fernmeldekontakt der Verteilerleiste.

Die Bereiche I bis IV des Kontaktfederteils 2 können in ihren Längenverhältnissen zueinander variiert werden, um die benötigten Federkräfte zu optimieren.

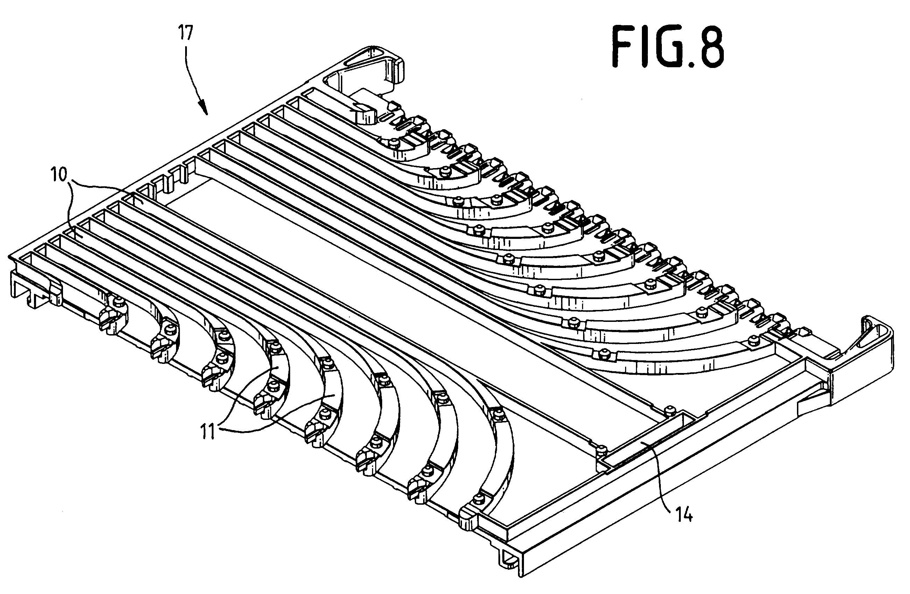

Die Fig. 7 und 8 zeigen Kanäle 10 zur Drahtführung, die einstückig aus einem Gehäuseteil eines der Module 17 der Verteilerleiste herausgeformt sind. Diese Kanäle 10 weisen Stege 11 auf, auf denen ein elektrisch leitendes Schirmblech 12 zur Abdeckung der Oberseite der Verteilerleiste befestigt werden kann. Das Schirmblech 12 weist eine federnd gestaltete Zunge 13 (Fig. 9) auf, die so abgebogen ist, daß sie an der Stelle 14 (Fig. 8,9) durch das Gehäuseteil des jeweiligen Moduls 17 geführt werden kann und bei der Montage des Moduls 17 eine Erdverbindung zum nichtdargestellten Gestell herstellt.

### BEZUGSZEICHENLISTE

- 01: Kontaktfeder
- 02: Kontaktfederteil
- 03: Basisteil
- 04: Fixierpunkt
- 05: Bohrung
- 06: Öffnung
- 07: Schneid-Klemm-Kontakt
- 08: Schneid-Klemm-Kontakt
- 09: Formkörper
- 10: Drahtführungskanal
- 11: Steg
- 12: Schirmblech
- 13: Zunge
- 14: Stelle
- 15: Kammer
- 16: Schlitz
- 17: Modul
- 18: Kontaktbereich
- 19: Abgreifkontakt
- 20: Führungsbutzen
- 21: Schweißwarze
- 22: Kontaktfläche
- 23: Kontaktfläche
- 24: Sicke

## Patentansprüche

1. Verteilerleiste für die Telekommunikations- und Datentechnik, insbesondere für den Hauptverteiler von Fernsprech- und Datenleitungen, mit im Inneren der modular aufgebauten Verteilerleiste angeordneten Kontaktfedern (1), welche aus Anschlußkontakten (7,8) in Schneid-Klemm-Technik auf der Vorder- und Rückseite der Leiste, aus einem Fernmeldekontakt (22) im mittleren Bereich gebildet sind, und bei denen ein Abgreifkontakt (19) im vorderen Bereich der Kontaktfeder (1) ausgebildet ist,
**dadurch gekennzeichnet,** daß
die Kontaktfeder (1) aus einem Basisteil (3) und einem darauf angebrachten Kontaktfederteil (2) gebildet ist, wobei im mittleren Bereich des Basisteils (3) Fixierpunkte (4) für die Längsrichtung und eine Öffnung (6) zum Durchtauchen des aufgebrachten Kontaktfederteils (2) vorgesehen sind und im vorderen Bereich des Basisteils (3) eine Bohrung (5) zur Lagefixierung des aufzubringenden Kontaktfederteils (2) angeordnet ist.

2. Verteilerleiste nach Anspruch 1, dadurch gekennzeichnet, daß im Kontaktbereich der Schneid-Klemm-Kontakte (7,8) an den Gehäuseteilen der Leistenmodule (17) einseitig ein Formkörper (9) angeformt ist.

3. Verteilerleiste nach Anspruch 1, dadurch gekennzeichnet, daß Drahtführungskanäle (10) an einem der Gehäuseteile der Leistenmodule (17) angeformt sind, die Stege (11) aufweisen, auf die ein Schirmblech (12) mit einer federnden Zunge (13) aufgebracht ist, wobei die Zunge (13) abgebogen und durch das Gehäuse des Moduls (17) der Leiste geführt ist.

4. Verteilerleiste nach Anspruch 1, dadurch gekennzeichnet, daß die Kontaktfeder (1) aus unterschiedlichen Materialien gefertigt ist.
